Europäisches Patentamt

European Patent Office

Office européen des brevets

(11) Publication number: **0 184 759 B1**

# EUROPEAN PATENT SPECIFICATION

(45) Date of publication of patent specification: **16.10.91**    (51) Int. Cl.⁵: **B29C 53/82**

(21) Application number: **85115317.1**

(22) Date of filing: **03.12.85**

(54) **Apparatus for the discontinuous production of tubular structures or structures obtainable from tubular structures.**

<table>
<tr><td>(30) Priority: <b>12.12.84 IT 2401684</b></td><td>(73) Proprietor: <b>Piccioli, Dino<br>"Peccio Martino"<br>I-06060 Pietrafitta (PG)(IT)</b></td></tr>
<tr><td>(43) Date of publication of application:<br><b>18.06.86 Bulletin 86/25</b></td><td></td></tr>
<tr><td>(45) Publication of the grant of the patent:<br><b>16.10.91 Bulletin 91/42</b></td><td>(72) Inventor: <b>Piccioli, Dino<br>"Peccio Martino"<br>I-06060 Pietrafitta (PG)(IT)</b></td></tr>
<tr><td>(84) Designated Contracting States:<br><b>AT BE CH DE FR GB LI LU NL SE</b></td><td>(74) Representative: <b>Gervasi, Gemma, Dr. et al<br>Studio Brevetti e Marchi NOTARBARTOLO &<br>GERVASI 33, Viale Bianca Maria<br>I-20122 Milano(IT)</b></td></tr>
<tr><td>(56) References cited:<br><b>DE-A- 2 352 373<br>DE-B- 1 596 658<br>GB-A- 2 040 871<br>US-A- 3 988 103<br>US-A- 4 462 787</b></td><td></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to an apparatus for the discontinuous production of tubular structures or structures obtainable from tubular structures of single-layer, multi-layer or cellular-structured thermosetting synthetic resin, by forming them on a cantilever-mounted, collapsable rotatable mandrel.

The invention also relates to the method for forming the collapsable mandrel which characterises the new apparatus according to the invention.

Thermosetting resins such as polyester, epoxy, phenolic, urea and similar resins are known to have attained physical, chemical and mechanical characteristics (especially when reinforced with suitable materials) such as to compete with steel in very wide sectors of application such as the nautical, aeronautical, missile, building, automobile and other sectors.

In particular, in the case of piping of any type and diameter, thermosetting resin pipes gain about 1% of the world market relative to steel pipes every year because of their resistance to chemical agents, to atmospheric corrosion, to stray currents and to ageing, together with a lightness and economy which cannot be attained either with common steels or special steels.

Many methods have been proposed up to the present time for producing thermosetting resin tubes by extrusion on a steel mandrel or by centrifuging in moulds for forming the required shape, the reinforcement elements being introduced by various methods ranging from extruding or centrifuging the resin together with the reinforcement materials in the form of shavings or cut fibres, to the formation of "windings" with continuous or woven fibres.

None of these known processes can be considered the ideal solution in terms of perfection of the manufactured article obtained, process economy, or the investment required.

In particular, previous patents of the present applicant (Italian patent 913,251, 936,537 and 967,401) describe processes for producing original cellular structures comprising a support layer and a covering layer of reinforced thermosetting resins, together with an intermediate layer of variously structured expanded material. In the specific case of the discontinuous production of tubes characterised by the described cellular structure, the structure was formed on rotating steel mandrels on which the various scheduled layers were successively applied and worked.

In practice, notwithstanding the validity of the structure produced, the production method proved inadequate for large-scale industrial production, both because of the complexity and cost of the equipment comprising steel mandrels, especially if of large diameter, and because of the impossibility of constructing steel mandrels totally free from surface imperfections, which obviously affect the finished articles, productivity and resultant scrap.

The applicant has now conceived the subject of the present invention, namely a new apparatus for the discontinuous production of tubular structures at least partly constituted by possibly reinforced, single-layer, multi-layer, sandwich or cellular-structured synthetic thermosetting resins, which requires very low investment, allows perfect production of tubes of any size and suitable for any requirement, can be completely automated, and can therefore be considered the solution to all current problems in this field.

The apparatus according to the invention comprises a collapsable cantilever-mounted mandrel of thermosetting synthetic resin and driven with rotary motion, and constituted essentially by an inner layer of thermosetting resin, possibly reinforced, an intermediate layer of expanded resin, possibly reinforced with reinforcement ribs inserted into the expanded material, and an outer layer of thermosetting resin, possibly reinforced, the multilayer resin structure of the mandrel being devided longitudinally into three parts by three cuts, made along the generating lines of the collapsible mandrel and defining two movable parts of said collapsible mandrel.

The new mandrel which characterises the apparatus according to the present invention is produced by the method described hereinafter in detail with reference to the accompanying drawings, which diagrammatically show the apparatus used.

- Figures 1 and 2 show the construction of the mandrel.
- Figure 3 is a general view of the forming system of the mandrel.
- Figure 4 shows the forming system in more details.

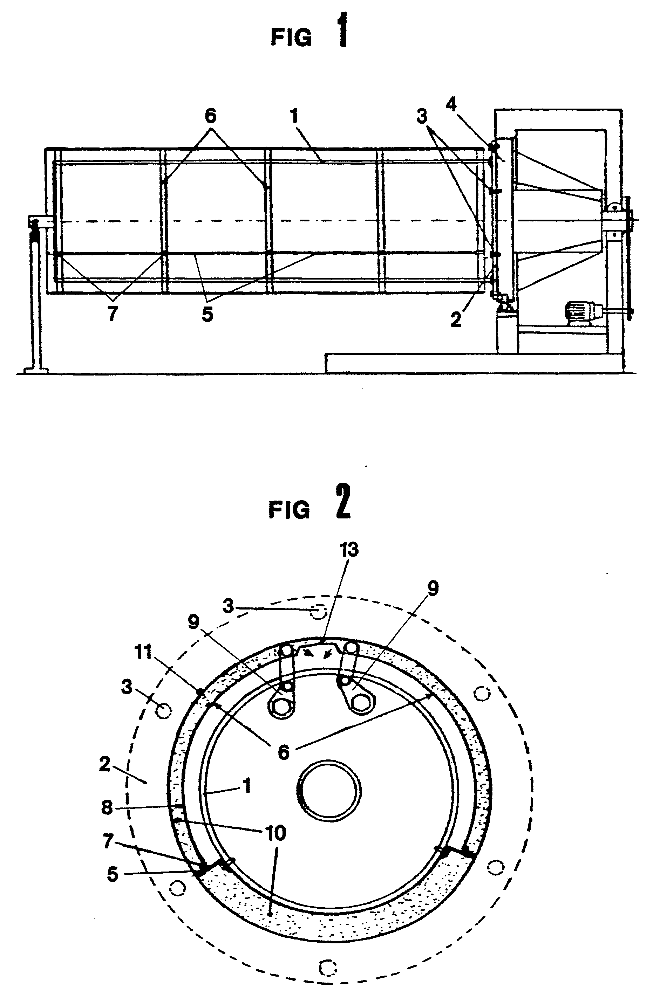

The drive part comprises a suitable frame and a support plate which is made to rotate rigid with the entire mandrel by means of two wheels on which it rests, and is provided with circumferential holes to enable mandrels of various diameters, varying for example from 300 to 1200 mm, to be mounted, the mandrel being constructed as follows (with particular reference to Figures 1 and 2): a tube or a tubular lattice element 1 is constructed, properly calculated to resist, when cantilever-mounted, its own weight and the overlying weights of the collapsable structure plus the programmed weight of the most heavy piece to be formed. A connection plate 2 with the relative holes for its connection by bolts 3 to the rotating base plate 4 is fitted to one end. The fixed ribbing is formed from longitudinal [ iron elements 5. A series of mobile circumferential hoop segments is formed from

⌐___⌐

iron elements 6, with relative hinges 7 connected to the longitudinal ribbing (for example every 1.50 m) and at a distance from the outer wall of the tube or tubular base element 1 to allow modest collapsing (for example usually 3% of the diameter of the finished mandrel), and with the flanges of the iron element 6 at approximately 3 mm from the diameter of the finished mandrel. A sheet of resin 8 of about 15 tenths a mm thick and reinforced with glass fibres is applied below the hinge segments over the entire length of the tube, to form the inner layer of the two mobile sectors of the mandrel, it being joined to the hinge segments and to the longitudinal ribbing by cementing with resin and glass fibres.

The simple devices 9 for collapsing the mandrel are positioned on some or all of the hinge segments (according to the mandrel diameter).

The mandrel, now mechanically finished, is placed on the base support plate of the drive part, is fixed by bolts through the holes provided, and is rotated at a determined peripheral speed.

The machine for forming the expanded material is placed on the carriage, then with a calculated movement said expanded material is deposited at a density of about 80 kg/m³ over the entire surface 10 to the required height. A cutter is used to remove the excess part with perfect trimming, and if necessary circumferential reinforcements are placed in appropriate grooves. With the laminating machine positioned on the carriage, a sheet 11 having a thickness of about 3 mm such as to attain the final outer diameter of the mandrel is applied, taking the precaution of wrapping it during its construction with a band of mylar or cellophane in order to make it completely smooth. The three separation lines required for properly collapsing the mandrel are formed by simply laying a separator along the longitudinal iron elements 5 and along the central cut.

The prior art collapsible mandrel show generally only one longitudinal separation line (see for instance German 2.352.373 and US 4.462.787) because the cylindrical shell made of resin is enough thin to allow bending. In our mandrel instead the cylindrical shell made of resin is a composite structure comprising three layers namely inner layer, intermediate layer (of expanded resin) and outer layer, said layer being possibly also reinforced. This involves that our mandrel has very low flexibility and very high mechanical strenght and rigidity (i.e. very close size tolerance of the manufactured articles).

The resins used for the mandrel must resist the stresses deriving from the temperatures necessary for forming the pieces to be produced.

During the construction of the articles, the end of the mandrel, whatever its diameter, always rests on a stand which is withdrawn only on removing the finished piece.

The collapsing mechanism for the cylindrical frame comprises (see in particular Figure 2): the levers 9, possibly connected to a hydraulic circuit which operates them in such a manner as to rotate the two mobile parts 6 of the frame about the hinges 7 so that they partially overlap along the slot 13, consequently reducing the frame diameter.

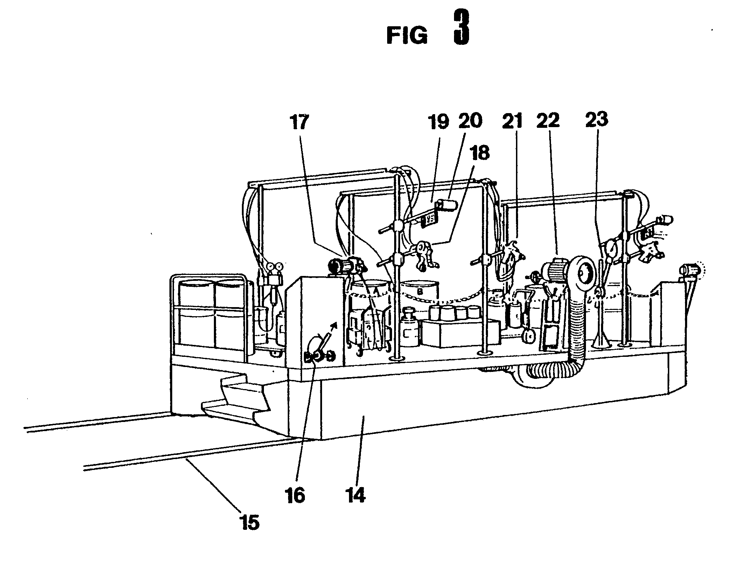

The materials and devices for forming the new mandrel according to the invention are disposed (with particular reference to Figure 3) on a carriage 14 mobile on rails 15 disposed parallel to the axis of the rotating frame.

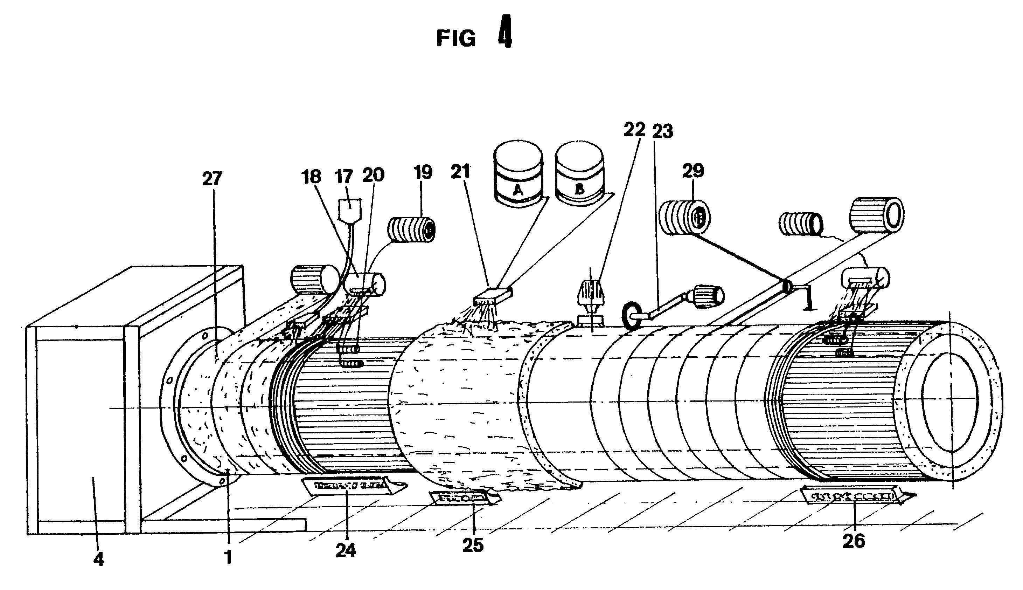

The forming system (see Figures 3 and 4) is constituted essentially by: a braking reel holder 16 for the reel of separation film 27 which wraps the finished mandrel; a device 17 for spraying synthetic resin in solution; a device 18 for spraying thermosetting synthetic resin simultaneously with cut synthetic fibres; a device 19 for the application of dry continuous reinforcement fibres by winding; a roller device 20; a device 21 for spraying resin to be expanded; a cutter 22 for trimming the expanded material, complete with aspirator; a device 23 for forming the grooves in the expanded material; a device 29 for inserting resin-impregnated rovings into the grooves formed in the expanded material; and a second set of devices equivalent to the devices 18, 19, 20 for applying a second layer of reinforced thermosetting resin and a surface resin covering.

The reference numerals 24, 25, 26 indicate possible heat sources for accelerating the resin setting.

These devices provided on the mobile carriage are used either wholly or partly according to the particular structure to be given to the mandrel.

Obviously all the aforesaid operations, or a part of them, together with other secondary operations comprising forming a pre-coating, rolling, smoothing, finishing and the like, are carried out "in succession" on every point of the rotating mandrel, or rather on all the points thereof lying on the same circumference, while along the mandrel axis other operations are simultaneously carried out, corresponding to different stages of advancement in the construction of the mandrel.

The same devices and same materials disposed on the mobile carriage can be used for forming single-layer, multi-layer, sandwich or cellular-structured cylindrical articles on the new mandrel constructed as heretofore described.

In producing the articles (as in the case of the construction of the mandrels), the thermosetting resins preferably used for the two outer layers and for the internal reinforcement ribs are chosen from the group consisting of polyester, epoxy and phenolic resins.

The reinforcement fibres, whether cut or in the form of bands, can be conveniently glass, carbon, nylon, sisal or similar and equivalent fibres.

The expanded resins for forming the intermediate layer are preferably resins of low-density, for example about 50-100 kg/m$^3$.

Polyurethane resins satisfy the said requirements.

As stated heretofore, the collapsable mandrel has enormous advantages over the steel mandrels used up to the present time in the production of single-layer, multi-layer or cellular synthetic resin tubular structures, in particular in accordance with the aforesaid previous patents of the present applicant, such as to enable structures of the type constructed up to the present time in an expensive and thus limited manner, although of excellent and unique characteristics, to be constructed much more economically.

In particular, the new mandrel is characterised by considerable lightness (weight 30-60% less than the steel mandrels used up to the present time), which allows considerable lightening of the fixed structure, a considerable reduction in the power of the motorised parts, and a much lighter construction of the part to be collapsed. Moreover, because of their lightness, the mandrels can in all cases be cantilever-mounted whatever the length and/or diameter of the tubes to be constructed, again with considerable saving in the fixed load-bearing structures.

Finally, in contrast to steel mandrels, the new mandrel does not disperse heat, which means that the forming operations with thermosetting resins or expanded polymers which are carried out on it are done much more rapidly.

The discontinuous forming of the tubular structures on the new mandrel is done by advancing the carriage 14 along the rails 15 parallel to the axis of the rotating mandrel. Any type of required structure can be formed on it by operating all or part of the devices, and using all or part of the materials arranged on the carriage.

Each of the layers making up the produced article can be either of constant or variable thickness, the term "variable thickness" signifying the possibility of creating reinforcement ribs by applying greater thicknesses of resin and/or reinforcement fibres.

To form layers of constant thickness, the following conditions must be satisfied:

a) constant flow rate of applied materials

b) constant angle of incidence of said materials

c) constant distance between the point of delivery of the materials and the point at which they become deposited

d) constant instantaneous relative peripheral speed of the point at which the deposition occurs.

If layers of variable thickness are to be formed, one or more of the aforesaid parameters must be varied, or the carriage halted for a certain time without stopping the mandrel and without varying the flow rate of the applied materials.

When forming is complete, the mandrel collapse mechanism is operated and the produced tube is withdrawn.

The new apparatus comprising the new mandrel allows substantial improvement in the production for example of tubes for conveying fluids, tank shells for tankers, silos, sump pits, cylindrical members for transporting fluids on the surface or underground, freezers, containers, cylinders for home use, or caravans, with the most varied characteristics; and also in the production of articles obtained by cutting tubular structures, such as irrigation channels, covers, curved walls and numerous others.

## Claims

1. An apparatus for the discontinuous production of tubular structures, at least partly constituted by possibly reinforced, single-layer, multi-layer, sandwich or cellular-structured synthetic thermosetting resins, said apparatus comprising a collapsible cantilever-mounted mandrel of thermosetting synthetic resin and driven with rotary motion, and constituted essentially by an inner layer (8) of thermosetting resin, possibly reinforced, an intermediate layer of expanded resin (10), possibly reinforced with reinforcement ribs inserted into the expanded material, and an outer layer of thermosetting resin (11), possibly reinforced, the multilayer resin structure of the mandrel being devided longitudinally, into three parts by three cuts, made along the generating lines of the collapsible mandrel and defining two movable parts (6) of said collapsible mandrel.

2. An apparatus as claimed in claim 1, wherein the thermosetting resin costituting the inner layer (8), the outer layer (11) and the reinforcement ribs of the mandrel is chosen from the group consisting of polyester, epoxy, urea and phenolic resins.

3. An apparatus as claimed in claim 1, wherein the thermosetting resin is reinforced with glass, carbon, nylon or vegetable fibres.

4. An apparatus as claimed in claim 1, wherein the intermediate layer (10) in the constituent cellular structure of the mandrel is of expanded polyurethane.

5. A method for forming a collapsible cantilever-mounted mandrel of thermosetting synthetic resin, characterised in that on a collapsable support frame there is applied a layer (8) of possibly reinforced thermosetting synthetic resin, which is hardened by heating, on this there being applied a layer (10) of expanded material which is formed by heating, is perfectly smoothed and possibly grooved by milling, and finally covered with a further layer (11) of possibly reinforced thermosetting resin, which is hardened by heating, the cylindrical structure thus formed being cut by inserting a separator along three generating lines, two corresponding with the hinges (7) of the support frame and a third corresponding to the collapsing opening (13) of the frame and thus of the mandrel.

6. A method as claimed in claim 5, wherein the mandrel is wrapped in a separation film of artificial or synthetic resin, or metal.

7. A method as claimed in claim 5, wherein the thermosetting resin used is chosen from the group consisting of polyester, epoxy, urea and phenolic resins, reinforced with glass, carbon, nylon or vegetable fibres.

8. A method as claimed in claim 5, wherein the expanded material layer is formed from polyurethane resin.

9. A method as claimed in claim 5, wherein the expanded material layer is grooved, and into the grooves there are inserted reinforcement ribs constituted by thermosetting resins reinforced with cut fibres, or by bands of reinforcement fibres possibly impregnated with thermosetting resins.

**Revendications**

1. Un appareil pour la production discontinue de structures tubulaires qui sont formées, au moins en partie, de résines synthétiques thermodurcissantes, éventuellement renforcées, sous form de couche simple ou multiple, de sandwich ou de structure céllulaire, le dit appareil comprénant un mandrin repliable monté en cantilever, de résine synthétique thermodurcissante, mis en rotation, et consistant essentiellement d'une couche interne (8) de résine thermodurcissante, possiblement renforcée, une couche intermediaire de résine expansée (10) possiblement renforcée par des côtes de renforcement inserées dans le matèriel expansé, et d'une couche extèrieure de résine thermodurcissante (11) possiblement renforcée, la structure en résine à plusieures couches du mandrin étant divisée longitudinalement en trois parties moyennant trois coupes faites selon les lignes gènèratrices du mandrin repliable et definissant deux parties mobiles (6) du dit mandrin.

2. Un appareil selon la revendication 1, dans lequel la résine thermodurcissante constituant la couche intèrieure (8), la couche extèrieure (11) et les côtes de renforcement du mandrin est choisie dans le group consistant de résines polyester, epoxide, urée et phénol.

3. Un appareil selon la revendication 1, dans lequel la résine thermodurcissante est renforcée par des fibres en verre, charbcn, nylon ou vegètables.

4. Un appareil selon la revendication 1, dans lequel la couche intérmediaire (10) dans la structure cellulaire constituant le mandrin est du polyurethane expansé.

5. Une méthode pour former un mandrin repliable monté en cantilever, en résine synthétique thermodurcissante, caracterisée par ce qu'on applique sur une structure de support une couche (8) de résine synthétique thermodurcissante possiblement renforcée, laquelle est durcie par la chaleur, et sur laquelle une couche (10) de matériel expansé est appliquée, formée en rechauffant, et parfaitement lisse et possiblement avec des rainures formées par fraisage et finalement couverte par une autre couche (11) de résine thermodurcissante possiblement renforcée, laquelle est durcie en rechauffant, la structure cylindrique ainsi formée étant coupée en insérant un sèparateur selon trois lignes génératrices, dont deux correspondentes aux charmières (7) de la structure de support, et la troisième correspondant à l'ouverture repliable (13) de la structure et ainsi du mandrin.

6. Une méthode selon la revendication 5, dans laquelle le mandrin est enveloppé dans un film séparateur en résine artificielle ou synthétique ou en métal.

7. Une méthode selon la revendication 5, dans laquelle la résine thermodurcissante est choisie dans le group formé par les résines polyester, epoxy, urée et phénol, renforcées par des fibres de verre, charbon, nylon ou fibres vegetables.

8. Un méthode selon la revendication 5, dans laquelle la couche de matériel expansé est formée par un résine polyurethane.

9. Une méthode selon la revendication 5, dans la quelle la couche de matériel expansé présente des rainures dans lequelles sont inserées côtes renforçantes constituées par des résines thermodurcissantes renforcées par des fibres coupées ou par des bandes de fibres renforçantes lequelles peuvent être imprégnées avec des résines thermodurcissantes.

**Patentansprüche**

1. Vorrichtung zur diskontinuierlichen Herstellung von röhrenförmigen Strukturen welche wenigstens teilweise aus synthetischen, einschichtigen, polyschichtigen, sandwich oder zellularstrukturierten, möglicherweise verstärkten wärmehärtenden Harzen bestehen, welche Vorrichtung einen freitragend aufgebauten zusammenklappbaren Dorn aus synthetischen wärmehärtenden Harzen einschliesst, welcher im wesentlichen aus einer inneren Schicht (8) einer wärmehärtenden möglicherweise verstärkten Harz, einer Zwischenschicht (10) aus verschäumten Harz, welche möglicherweise durch im verschäumten Stoff eingesetzten Verstärkungsrippen verstärkt ist, und aus einer aüsseren moglicherweise verkstärten Schicht aus wärmerhärtenden Harz (11), besteht, in welchem Dorn die polischichtige Harzstruktur in drei Teilen longitudinal dividiert ist durch drei langs die erzeugenden Linien des zusammenklappbaren Dornes gemachten Schnitten, welche zwei bewegliche Teilen (6) des zusammenklappbaren Dornes definieren.

2. Vorrichtung gemäß Anspruch 1, in welcher die, die innere Schicht (8), die äussere Schicht und die verstärkende Rippen auf dem Dorn, bildende wärmchärtende Harz aus der Gruppe von Polyester-, Epoxy-, Harnstoff- und Phenol Harzen ausgewählt wird.

3. Vorrichtung gemäss Anspruch 1, in welchen die wärmehärtende Harz mittels Glass-, Kohle-, Nylon- oder Pflanzenfasern verstärkt wird.

4. Vorrichtung gemäss Anspruch 1 in welcher die Zwischenchicht (10) der zellularen Struktur des Dornes aus verschäumten Polyurethan besteht.

5. Methode zur Herstellung eines zusammenklappbaren freitragend aufgebauten aus wärmehärtenden synthetischen Harz bestehenden Dorn, dadurch gekennzeichnet, dass, auf einem zusammenklappbaren Rahmenträger, eine Schicht (8) eines möglicherweise verstärkten synthetischen wärmehärtenden Harz, welche durch Heizung gehärtet wird, angebracht wird, auf dieser Schicht eine Schicht (10) aus einem verschäumten Stoff, welcher durch Heizung verformt wird, angebracht wird, und welche volkommen glatt ist und möglicherweise durch Fräsen gerillt wird, und endlich durch eine weitere aus möglicherweise verstärkten, wärmehärtenden Schicht (11) bedeckt wird, welche durch Heizung gehärtet wird, und die so erhaltene zylindrische Struktur durch Einsetzung eines Abschneiders entlang drie Zeuglinien, von welchen zwei zu den Scharnieren des Rahmenträgers enstsprechen, und die dritte zu der zusammen klappenden Öffnung (13) des Rahmens und daher des Dornes entspricht, geschnitten wird.

6. Methode gemäss Anspruch 5, dadurch gekennzeichnet, dass der Dorn in einer Trennfolie aus kunstlichen oder synthetischen Harz oder Metall eigehüllt wird.

7. Methode gemäss Anspruch 5, dadurch gekennzeichnet, dass der wärmehärtender Harz aus der Gruppe bestehend aus Polyestern-,, Epoxyden-, Harnstoff- und Phenol-, durch Glas-, Kohl-, Nylon- oder Phanzer-Fasern Verstärkten Harzen ausgewählt wird.

8. Methode gemäss Anspruch 5, dadurch gekennzeichnet, dass die aus Schaumsstoff bestehende Schicht aus Polyuretan Harz verformt wird.

9. Methode gemäss Anspruch 5, dadurch gekennzeichnet, dass die aus Schaumstoff bestehende Schicht gerillt wird, un dass in die Rillen Verstärkungsrippen aus mittels geschnitteten Fasern verstärkten wärmehärtenden Harzen oder aus verstärkenden möglicherweise durch wärmehärtende Härze getränkten Faserbanden eingesetzt werden.

# FIG 1

# FIG 2

FIG 3

FIG 4

EP 0 184 759 B1